# EUROPÄISCHE PATENTSCHRIFT

(11) **EP 3 389 457 B1**
(45) Veröffentlichungstag und Bekanntmachung des Hinweises auf die Patenterteilung: **28.02.2024**
(21) Anmeldenummer: 16770278.6
(22) Anmeldetag: 23.09.2016
(51) Int. Cl.: A47J 36/02

(54) **GEFÄSS MIT THERMOCHROMER INDIKATORBESCHICHTUNG**
VESSEL COMPRISING A THERMOCHROMIC INDICATOR COATING
RÉCIPIENT AVEC REVÊTEMENT INDICATEUR THERMOCHROMIQUE

(30) Priorität: 18.12.2015 DE 102015122203
(43) Veröffentlichungstag der Anmeldung: 24.10.2018
(73) Patentinhaber: Fissler GmbH, 55743 Idar-Oberstein (DE)
(72) Erfinder: EBBEKE, Helge, 55743 Idar-Oberstein (DE)
(74) Vertreter: Patentanwälte Bauer Vorberg Kayser
(86) Internationale Anmeldenummer: PCT/EP2016/072661
(87) Internationale Veröffentlichungsnummer: WO 2017/102123

(56) Entgegenhaltungen:
- EP-A1- 1 632 159
- KR-B1- 101 269 774
- US-A1- 2006 081 639

## Beschreibung

Die vorliegende Erfindung betrifft ein Gefäß zum Braten, Backen oder Kochen von Speisen mit mindestens einem sichtbaren ersten Material und einem sichtbaren zweiten Material, wobei sich zumindest das erste Material bei Erwärmung thermochrom reversibel verfärbt.

Die Erfindung bezieht sich insbesondere auf Pfannen und Töpfe, ist aber auch für andere zu erwärmende oder erhitzende Gefäße geeignet. Diese sind bekannt und in der Regel aus Metall (zum Beispiel Edelstahl oder Aluminium) und Kunststoff gefertigt, wobei üblicherweise der Kunststoff aufgrund seiner schlechten Wärmeleitung den oder die Griffe ausbildet und der eigentliche Gefäßkörper aus Metall gefertigt ist. Es werden zunehmend Materialien eingesetzt, die eine induktive Erwärmung des Gefäßes ermöglichen. Die Erfindung bezieht sich sowohl auf induktive erwärmbare als auch nicht induktive erwärmbare Gefäße. Die Erfindung eignet sich auch für eine Verwendung mit Keramik (Sol-Gel).

Häufig soll Brat- oder Backgut, das beispielsweise in einer Pfanne zubereitet werden soll, erst dann auf die Pfanne gegeben werden, wenn diese eine bestimmte Temperatur erreicht hat. Dies ist aber oftmals schwierig, da die jeweilige Temperatur der Pfanne optisch nicht erkennbar ist. Besonders häufig besteht das Problem, wenn sich in der Pfanne kein Öl oder Fett befindet, was insbesondere bei Pfannen oftmals der Fall ist, die mit einer Beschichtung aus Polytetrafluorethylen PTFE (Teflon^{®}) versehen sind.

Dieses Problem wird im Stand der Technik durch verschiedene Maßnahmen gelöst. Zum einen sind Thermometer bekannt, die auf den Pfannenboden aufgesetzt werden können, und die Temperatur anzeigen. Es sind aber auch Gefäße bekannt, die ein thermochromes reversibel verfärbbares Element aufweisen.

Beispielsweise zeigt die US 2012 0312 822 A1 eine Pfanne, in deren Pfannenstiel ein Bereich mit thermochromer Farbe angeordnet ist. Diese verändert sich beim Erwärmen der Pfanne, so dass der Benutzer durch die Farbveränderung einen Hinweis auf die Temperatur des Pfannenbodens erhält. Eine ähnliche Vorrichtung zeigt das deutsche Gebrauchsmuster GM 7734023. Auch bei diesem ist ein nicht mit Kochgut belegter Bereich, vorzugsweise der Stiel der Pfanne, mit einem thermochromen Element versehen.

Das Gebrauchsmuster DE 20 2010 001 501 U1 zeigt ein Gefäß zum Kochen, Backen und Braten von Speisen, bei dem thermochromes Material an diesen Außenmantelfläche angeordnet ist. Eine fehlende Beschichtung an dem Gefäßboden soll verhindern, dass der Kontakt zur Auflagefläche abgeschirmt wird. Im Gefäßinnern kann die für den Koch-, Brat- oder Backvorgang optimale Beschichtung gewählt werden. Die vollflächige Beschichtung der Mantelaußenfläche des Gefäßes lässt den Farbumschlag aus beliebigem Blickwinkel deutlich und rasch erkennen.

Nachteilig bei den genannten Pfannen und den Gefäßen ist u.a., dass das thermochrome Element bzw. die thermochrome Farbe nicht die tatsächliche Temperatur des Pfannenbodens anzeigt, sondern lediglich wärmeleitend mit dem Pfannenboden in Verbindung steht. Ist die Wärmeleitung unterbrochen oder gestört, kann es zu Fehlanzeigen kommen.

Weiterhin ist in der US 6 551 693 B1 eine Pfanne beschrieben, die im Bodenbereich Punkte aus thermochromen Material aufweist. Nachteilig ist, dass diese dann nicht mehr zu sehen sind, wenn der Boden mit Lebensmitteln belegt ist. Die DE 41 05 498 A1 zeigt ein Backblech, bei dem lediglich am Rand sichtbare Markierungen aus thermochromen Material angeordnet sind. Ähnliches gilt für einen in der EP 1 632 159 A1 beschriebenen Behälter. Bei diesem sind außen auf einem Topf angebrachte Dekorationen thermochrom ausgeführt, bei einem Behälter gemäß der DE 20 2010 007 470 U1 sind es Anzeigen auf seiner Außenseite. Alle beschriebenen Gefäße oder Behälter haben den Nachteil, dass der Benutzer nicht ohne weiteres erkennen kann, wann ein gewünschter Temperaturbereich erreicht ist. Auch kann die Wärmeverteilung innerhalb der Gefäße und Behälter dazu führen, dass die Anzeige nicht zuverlässig informiert.

Die beschriebenen Ausführungsformen aus dem Stand der Technik haben außerdem den Nachteil, dass der Benutzer wissen muss, wie das thermochrome Element aussehen muss, wenn die optimale Temperatur erreicht ist. Der entsprechende Farbumschlag muss dem Benutzer auffallen, weswegen er das thermochrome Element im Zweifel während des Erwärmungsprozesses beobachten muss. Insbesondere bei längerer Nichtverwendung des Gefäßes kann es vorkommen, dass der Benutzer nicht mehr weiß, welcher Farbumschlag sich beim Erhitzen der Pfanne ergibt.

US 2006/0081639 A1 offenbart Kochgeschirr, an deren äußeren Oberfläche eine nicht-thermochrome Beschichtung angebracht ist. Auf der nicht-thermochromen Beschichtung ist eine thermochrome Beschichtung angebracht, die bei einer definierten Temperatur von einem opaken Zustand zu einem transparenten oder transluzenten Zustand wechselt. Dadurch gibt die thermochrome Beschichtung den Blick auf die nicht-thermochrome Beschichtung frei. Auf der nicht-thermochromen Beschichtung können ergänzend Symbole oder Buchstaben angebracht sein.

Aus der KR 101 269 774 B1 sind Töpfe bekannt, die an der Außenseite eine Beschichtung aufweisen. Die Beschichtung weist thermochrome und nicht-thermochrome Bereiche auf. In Abhängigkeit der Temperatur bilden sich Farbunterschiede aus.

Die Aufgabe der vorliegenden Erfindung besteht darin, ein Gefäß zum Braten, Backen oder Kochen von Speisen vorzuschlagen, das möglichst einfach zu benutzen ist. Insbesondere soll der Benutzer in der Lage sein, die erreichte Temperatur der Pfanne möglichst schnell einfach und unmittelbar erfassen zu können.

Erfindungsgemäß wird die Aufgabe durch ein Gefäß mit den Merkmalen des Patentanspruchs 1 gelöst.

Demnach weist das Gefäß zumindest ein erstes Material auf, das thermochrom reversibel reagiert, während sich das zweite Material nicht verfärbt. Die Farbgebung der beiden Materialien ist derart gewählt, dass über einen Vergleich der Farben der beiden Materialien miteinander erkennbar ist, in welchem Temperaturbereich sich die Temperatur des Gefäßes befindet.

Anders ausgedrückt ist es für den Benutzer nicht mehr notwendig, den Farbumschlag des thermochromen Materials zu kennen, er muss lediglich die sich einstellende Farbe des thermochromen Materials mit der Farbe des anderen Materials vergleichen. Das nicht thermochrom ausgeführte andere Material dient sozusagen als Referenzfarbe für das sich thermochrom verfärbende Material.

Im Folgenden werden die Begriffe Pfanne oder Topf als Synonym für sämtliche für die Erfindung geeignete Gefäße verwendet. Insofern sind die Begriffe Pfanne oder Topf nicht einschränkend zu verstehen.

Erfindungsgemäß weist das zweite, sich nicht thermochrom verfärbende Material bereits im kalten Grundzustand eine Farbe auf, die sich beim thermochrom verfärbbaren Material einstellt, wenn dieses die gewünschte Temperatur erreicht hat. Dies führt dazu, dass im kalten Grundzustand des Gefäßes zwei unterschiedliche Farben erkennbar sind, die sich im gewünschten Temperaturbereich dagegen nicht mehr oder kaum noch voneinander unterscheiden. Visuell verschwindet sozusagen der Farbunterschied, was für den Benutzer schnell und einfach erkennbar ist. Möglich ist eine sprunghafte, schnelle Farbveränderung, denkbar ist aber auch, dass sich die Farben beim Erwärmen des Gefäßes zunehmend einander annähern.

Erfindungsgemäß kann vorgesehen sein, dass eines der Materialien in Form von alphanummerischen Zeichen auf das Gefäß aufgebracht ist. Insbesondere kann beispielsweise ein Schriftzug vorgesehen sein, der einen Hinweis auf die Temperatur gibt. In einer Ausführungsvariante kann z.B. das Wort "heiß" oder "hot" dann erscheinen, wenn das Gefäß die gewünschte Temperatur erreicht hat. Umgekehrt kann beispielsweise das Wort "kalt" oder "cold" sichtbar sein, solange das Gefäß die gewünschte Temperatur bzw. den gewünschten Temperaturbereich noch nicht erreicht hat. Alternativ oder zusätzlich können auch leicht erkennbare Symbole verwendet werden.

Alternativ ist auch denkbar, dass ein Referenzfeld mit einer Art Farbverlauf auf das Gefäß aufgebracht und benachbart zu diesem Farbverlauf thermochromisches Material angeordnet ist. Die Verfärbung des thermochromischen Materials ist abhängig von der steigenden Temperatur, so dass anhand des sich nicht thermochrom verfärbbaren Farbverlaufs erkennbar ist, in welchem Temperaturbereich sich das Gefäß während der Erwärmung gerade befindet. Auch können während der Erwärmung Zahlen sichtbar werden oder bleiben, die jeweils einen Temperaturbereich angeben, in dem sich das Gefäß gerade befindet.

Erfindungsgemäß weist das Gefäß, vorzugsweise eine Pfanne, in ihrem Innern eine durchgängige Beschichtung aus thermochromen Material auf. Zusätzlich ist das Innere des Gefäßes mit über die Fläche verteilt angeordneten Bereichen aus nicht thermochromen Material versehen. Diese Bereiche, beispielsweise Farbsprenkel, weisen diejenige Farbe auf, die das erste, sich thermochrom reversibel verfärbende Material dann annimmt, wenn der gewünschte Temperaturbereich erreicht ist. Optisch ist somit im kalten Grundzustand der Pfannenboden und ggf. auch der innere Pfannenrand mit sichtbaren Farbsprenkeln versehen. Wird die Pfanne erhitzt, verschwinden diese zunehmend, bis die Pfanne eine durchgängige, einheitliche Farbgebung in dem gewünschten Temperaturbereich aufweist. Alternativ ist auch die umgekehrte Anordnung denkbar. Das Gefäß bzw. Pfanne weist dann im kalten Grundzustand eine durchgehende, einheitliche Farbgebung auf, durch Erwärmung verändern sich die thermochromen Bereiche oder Sprenkel, so dass die Pfanne dann, wenn sie den gewünschten Temperaturbereich erreicht hat, zweifarbig ist.

Die Erfindung eignet sich insbesondere auch für Backbleche. Diese werden zwar üblicherweise nicht als Gefäß bezeichnet, es wird aber explizit darauf hingewiesen, dass sich der Begriff im Sinne der Erfindung auch auf Backbleche bezieht. Backbleche können ohnehin beispielsweise für Kuchen auch als Gefäß verwendet werden. Bei Backblechen ergibt sich oftmals das Problem, dass diese sich noch im bereits ausgeschalteten Ofen befinden, aber noch heiß sind. Dies wiederum kann dazu führen, dass sich der Benutzer beim Versuch, die heißen Backbleche herauszunehmen, verbrennt. Aus diesem Grund kann auch hier die erfindungsgemäße Verwendung von zwei verschiedenen Materialien genutzt werden, um beispielsweise einen gut sichtbaren Warnhinweis dann zu generieren, wenn das Backblech noch heiß ist. Beispielsweise ist ein alphanummerisches Zeichen oder auch der Warnhinweis "heiß" gut erkennbar, solange das Backblech heiß ist. Umgekehrt kann auch ein Hinweis sichtbar werden, wenn das Backblech wieder kalt genug ist.

Als besonders geeigneter Temperaturbereich hat sich für Pfannen beispielsweise als Beginn für den Farbumschlag 60° C bis 100° C und als Ende des Farbumschlags 80° C bis 250° C als besonders günstig erwiesen. Die Farbbereiche können je nach Auswahl des thermochromen Materials aber auch andere, insbesondere engere Grenzen aufweisen.

Erfindungsgemäß kann ein Aufbau eines Schichtsystems auf PTFE-Basis folgendermaßen ausgeführt sein:
1. Primär-Schicht
   - sorgt für eine Haftung der Antihaftschicht zum Untergrund.
2. Mittelschicht
   - verstärkt das System,
   - hat einen hohen Antihaftanteil,
   - ist bevorzugt komplett thermochrom ausgelegt.
3. Referenzschicht
   - wird beispielsweise in Form von Sprenkeln aufgespritzt,
   - stellt eine Referenzfarbe zum Thermochromfarbumschlag der Mittelschicht dar.
4. Deckschicht
   - Antihaftschicht,
   - Transparent, transluzent.

Dieser Aufbau hat sich als zielführend und praktikabel erwiesen, Abweichungen, Ergänzungen oder Anpassungen sind natürlich möglich. Insbesondere kann auf die Deckschicht auch verzichtet werden.

Zur Temperaturerkennung wird also in das Antihaftsystem des Gefäßes ein thermochromes Material eingebracht. Hierbei wird die Mittelschicht, die durch die transparente Deckschicht erkennbar ist, thermochrom ausgelegt. Unter dem Einfluss von Wärme verändert die Mittelschicht ihre Farbe. Auf die Mittelschicht wird eine Referenzfarbe in Form von Sprenkeln aufgetragen. Im kalten Zustand der Pfanne sind die Sprenkel durch die Farbdifferenz zur Mittelschicht deutlich erkennbar. Wird die Pfanne erhitzt, verändert sich die Farbe der Mittelschicht. Hierdurch sind die Sprenkel kaum noch wahrnehmbar, sie verschwinden optisch. Erkaltet die Pfanne, werden die Sprenkel wieder sichtbar.

Die Erfindung wird auf Basis der nachfolgenden Figuren näher erläutert. Diese sind nur beispielhaft zu verstehen sollen die Erfindung nicht auf die dargestellten Ausführungsbeispiele beschränken.

Es zeigen:
- Fig. 1:: eine erfindungsgemäße Pfanne im kalten Grundzustand,
- Fig. 2:: die Pfanne aus Figur 1 im erwärmten Zustand,
- Fig. 3:: eine zweite Ausführungsvariante einer erfindungsgemäßen Pfanne,
- Fig. 4:: eine dritte Ausführungsvariante einer erfindungsgemäßen Pfanne,
- Fig. 5:: eine vierte Ausführungsvariante einer erfindungsgemäßen Pfanne.

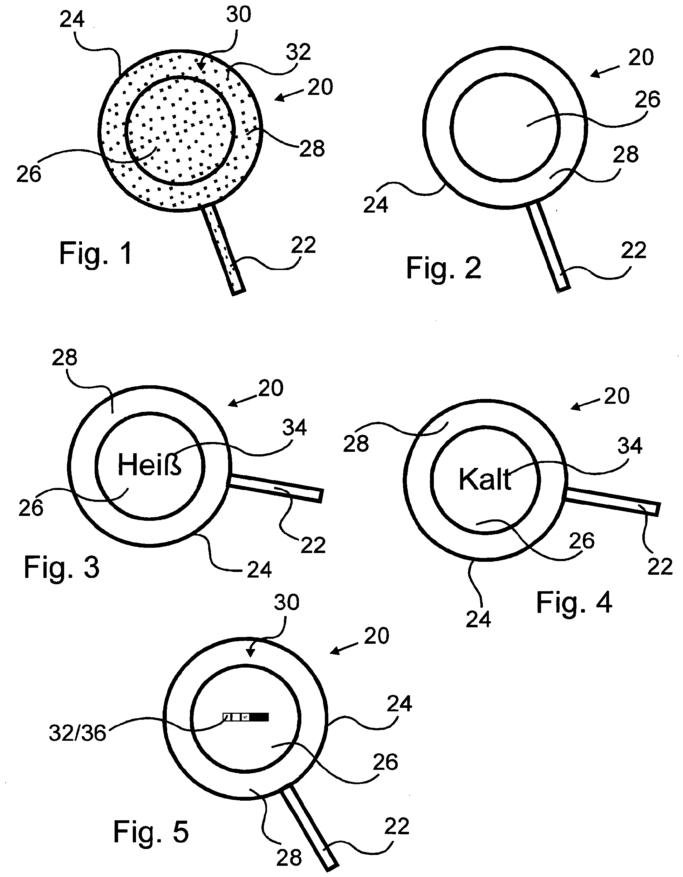

Die Figuren 1 bis 5 zeigen ein erfindungsgemäßes Gefäß 20, hier eine Pfanne, von oben. Erkennbar ist ein Stiel 22 und ein Gefäßkörper 24. Der Gefäßkörper 24 weist einen Boden 26 und einen Rand 28 auf.

Figur 1 zeigt das Gefäß 20 im kalten Grundzustand. Erkennbar sind ein erstes Material 30 und ein zweites Material 32. Das erste Material 30 bedeckt im gezeigten Ausführungsbeispiel das Innere des Gefäßkörpers 24 vollflächig, während das zweite Material 32 nur bereichsweise in Form von Sprenkeln oder kleinflächigen Bereichen aufgetragen ist. Das erste Material 30 ist thermochrom reversibel ausgeführt und verfärbt sich bei zunehmender Erwärmung. Das zweite Material 32 ist dagegen nicht thermochrom ausgeführt und weist eine Farbe auf, die das erste Material 30 dann annimmt, wenn es bis zu einem bestimmten Temperaturbereich erwärmt wird.

Figur 2 verdeutlicht den Zustand des Gefäßes 20, wenn es so weit erwärmt wurde, dass es den gewünschten Temperaturbereich erreicht hat. Die zuvor sichtbaren Bereiche oder Sprenkel des zweiten Materials 32 sind nicht mehr sichtbar, da der Farbunterschied zwischen dem ersten Material 30 und dem zweiten Material 32 nicht mehr oder kaum noch besteht. Während sich das erste Material 30 thermochrom verfärbt, behält das zweite Material 32 seine Farbe bei.

Figur 3 zeigt ein Ausführungsbeispiel, bei dem alphanummerische Zeichen 34 genutzt werden. Im gezeigten Ausführungsbeispiel ist das Gefäß 20 erhitzt, wodurch sich ein Farbunterschied zwischen dem ersten Material 30 und dem zweiten Material 32 einstellt, so dass der Schriftzug "hot" deutlich erkennbar ist.

Figur 4 zeigt dagegen ein umgekehrtes Beispiel, bei dem sich ein Farbunterschied zwischen dem ersten Material 30 und dem zweiten Material 32 dann einstellt, wenn sich das Gefäß 20 im kalten Grundzustand befindet. Erkennbar ist der Schriftzug "cold", der bei Erwärmung der Pfanne optisch verschwindet.

Figur 5 zeigt ein Ausführungsbeispiel, bei dem die Temperaturveränderung während des Erwärmungsprozesses erkennbar ist. In einem Referenzfeld 36 ist ein Farbverlauf dargestellt, im gezeigten Ausführungsbeispiel nebeneinander gereihte Felder oder Bereiche. Das Referenzfeld 36 weist verschiedene Farbbereiche auf, die jeweils einer temperaturabhängigen Verfärbung des thermochromen Materials entsprechen. Im gezeigten Ausführungsbeispiel ist erneut das erste Material 30 thermochrom ausgeführt und bedeckt zumindest den Boden 26. Das Referenzfeld 36 ist aus nicht thermochromen Material 32 ausgebildet. Dabei repräsentiert jedes Feld innerhalb des Referenzfeldes 36 bezüglich der Farbgebung einen bestimmten Temperaturbereich. Wird nun das Gefäß 20 erwärmt, verändert sich die Farbe des ersten Materials 30 kontinuierlich, beispielsweise von einem hellroten Farbton in einen dunkelroten Farbton. Das Referenzfeld 36 weist für verschiedene Temperaturbereiche, beispielsweise 0 bis 50° C, 50 bis 100° C, 100 bis 150° C, 150 bis 200° C und mehr als 200° C den entsprechenden Rotton des thermochromen Materials 30 auf. Somit kann ein Benutzer auf den ersten Blick erkennen, welche Temperatur das Gefäß 20 bzw. die Pfanne gerade aufweist. Das Referenzfeld 36 ist im gezeigten Ausführungsbeispiel auf dem Boden 26 angeordnet, es kann vorzugsweise aber auch im Bereich des Randes 28 vorgesehen sein. Denkbar ist auch die Verwendung mehrerer Referenzfelder 36, beispielsweise im Boden 26 und im Rand 28.

Das Gefäß 20 kann aus verschiedenen Materialien gefertigt sein, beispielsweise aus Edelstahl, Aluminium oder einem anderen für eine Beschichtung geeigneten Material.

Es kann lediglich der Boden 26 beide Materialien 30, 32 aufweisen, vorteilhafterweise weist aber auch der Rand 28 beide Materialien 30, 32 auf. Dies ist deshalb besonders sinnvoll, da der Boden 26 oftmals mit Bratgut nahezu vollständig belegt ist.

Die Erfindung ist nicht auf die beschriebenen und gezeigten Ausführungsbeispiele beschränkt, vielmehr ergeben sich zahlreiche weitere Anwendungsmöglichkeiten, die dem in den Ansprüchen definierten Gegenstand entsprechen. Wesentlich ist, dass die Farbunterschiede der beiden Materialien 30, 32 genutzt werden, um sich ein einstellende Temperaturbereiche sichtbar zu machen.

## Patentansprüche

1. Gefäß (20) zum Braten, Backen oder Kochen von Speisen, mit einem sichtbaren ersten Material (30), das sich bei Erwärmung thermochrom reversibel verfärbt,
**dadurch gekennzeichnet, dass**
das Gefäß (20) in seinem Innern eine durchgängige Beschichtung aus dem ersten thermochromen Material (30) und über die Fläche verteilt angeordnete Bereiche aus einem zweiten nicht thermochromen Material (32) aufweist, wobei zumindest ein Boden (26) und ein innerer Rand (28) des Gefäßes (20) mit den beiden Materialien (30, 32) versehen ist,
• wobei in einem ersten Temperaturbereich, der einem kalten Grundzustand des Gefäßes (20) entspricht, zwei unterschiedliche Farben der beiden Materialien (30,32) erkennbar sind und wobei das zweite Material (32) diejenige Farbe aufweist, die das erste Material (30) dann annimmt, wenn ein zweiter Temperaturbereich erreicht ist, so dass sich im zweiten Temperaturbereich eine einheitliche Farbgebung einstellt, oder
• wobei in einem ersten Temperaturbereich, der einem kalten Grundzustand des Gefäßes (20) entspricht, das erste Material (30) und des zweite Material (32) dieselbe Farbe aufweisen und wobei in dem zweiten Temperaturbereich zwei unterschiedliche Farben der beiden Materialien (30,32) erkennbar sind,
so dass die Farbe des zweiten Materials (32) als Referenzfarbe für das sich thermochrom verfärbende erste Material (30) dient.

2. Gefäß (20) nach Anspruch 1, **dadurch gekennzeichnet, dass** ein alphanummerisches Zeichen (34) im ersten Temperaturbereich, der dem kalten Grundzustand des Gefäßes (20) entspricht, erkennbar, und im zweiten Temperaturbereich kaum oder nicht erkennbar ist.

3. Gefäß (20) nach Anspruch 1, **dadurch gekennzeichnet, dass** ein alphanummerisches Zeichen (34) im ersten Temperaturbereich, der dem kalten Grundzustand des Gefäßes (20) entspricht kaum oder nicht erkennbar und im erwärmten zweiten Temperaturbereich des Gefäßes (20) erkennbar ist.

4. Gefäß (20) nach einem der Ansprüche 1 bis 3, **dadurch gekennzeichnet, dass** das Gefäß (20) ein Referenzfeld (36) aufweist, über das verschiedene Temperaturbereiche während der Erwärmung oder Abkühlung des Gefäßes (20) aufgrund sich ändernder Farbunterschiede der beiden Materialien (30, 32) ablesbar sind.

## Claims

1. Vessel (20) for frying, baking or cooking foodstuffs, including at least one visible first material (30) which reversibly changes colour thermochromically upon heating,
**characterized in that**
the interior of the vessel (20) has a continuous coating of the first thermochromic material (30), and regions of a second, nonthermochromic material (32) are distributed over the surface thereof, wherein at least a base (26) and an inner rim (28) of the vessel (20) is/are furnished with both materials (30, 32)
- wherein when the vessel (20) is in a first temperature range, corresponding to a cold basic state, two different colours of the two materials (30, 32) are detectable, and wherein the colour of the second material (32) is the colour the first material (30) shows when a second temperature range is reached, so that a uniform colouration is presented in the second temperature range, or
- wherein when the vessel (20) is in a first temperature range, corresponding to a cold basic state, the first material (30) and the second material (32) are the same colour, and wherein in the second temperature range the two different colours of the two materials (30, 32) are visible, so that the colour of the second material (32) serves as a reference colour for the first material (30), the colour of which undergoes thermochromic change.

2. Vessel (20) according to Claim 1, **characterized in that** an alphanumeric character (34) is detectable in the first temperature range, corresponding to the cold, basic state of the vessel (20), and is barely detectable or not at all detectable in the second temperature range.

3. Vessel (20) according to Claim 1, **characterized in that** an alphanumeric character (34) is barely detectable or not at all detectable in the first temperature range, corresponding to the cold, basic state of the vessel (20), and is detectable when the vessel (20) is in the heated, second temperature range.

4. Vessel (20) according to any one of Claims 1 to 3, **characterized in that** the vessel (20) has a reference field (36), from which different temperature ranges can be read while the vessel (20) is being heated or cooling due to the varying differences in colour between the two materials (30, 32).

## Revendications

1. Récipient (20) servant à faire rôtir, cuire ou cuisiner des mets, comportant un premier matériau visible (30) qui, en chauffant, se colore de manière thermochromique et réversible,
**caractérisé en ce que**
le récipient (20) présente à l'intérieur un revêtement continu composé du premier matériau thermochromique (30) et de zones réparties sur la surface composées d'un second matériau non thermochromique (32), au moins un fond (26) et un bord intérieur (28) du récipient (20) étant pourvus des deux matériaux (30,32),
• dans lequel, dans une première plage de température qui correspond à un état de base froid du récipient (20), deux couleurs différentes des deux matériaux (30,32) sont discernables, et le second matériau (32) présente la couleur que le premier matériau (30) prend lorsqu'une seconde plage de température est atteinte, de sorte que, dans la seconde plage de température, une coloration uniforme s'établit, ou
• dans lequel, dans une première plage de température qui correspond à un état de base froid du récipient (20), le premier matériau (30) et le second matériau (32) présentent la même couleur et dans lequel, dans la seconde plage de température, deux couleurs différentes des deux matériaux (30,32) sont discernables,
de sorte que la couleur du second matériau (32) sert de couleur de référence pour le premier matériau (30) se colorant de manière thermochromique.

2. Récipient (20) selon la revendication 1, **caractérisé en ce qu'**un signe alphanumérique (34) est discernable dans la première plage de température qui correspond à l'état de base froid du récipient (20) et est à peine ou n'est pas du tout discernable dans la seconde plage de température.

3. Récipient (20) selon la revendication 1, **caractérisé en ce qu'**un signe alphanumérique (34) est discernable dans la première plage de température qui correspond à l'état de base froid du récipient (20) ou est à peine ou non discernable dans la seconde plage de température chauffée du récipient (20).

4. Récipient (20) selon une des revendications 1 à 3, caractérisé en ce le récipient (20) présente un champ de référence (36) sur lequel différentes plages de température sont consultables pendant le chauffage ou le refroidissement du récipient (20) en raison de différences de couleur variables des deux matériaux (30,32).
